# EUROPEAN PATENT APPLICATION

(11) **EP 1 371 950 A2**
(43) Date of publication of application: **17.12.2003**
(21) Application number: 03013627.9
(22) Date of filing: 16.06.2003
(51) Int. Cl.: G01C 21/34

(54) **Navigation system, method and computer program**

(30) Priority: 14.06.2002 JP 2002174677
(71) Applicant: AISIN AW CO., LTD., Anjo, Aichi 444-1192 (JP)
(72) Inventor: Yamada, Kunihiro, Okazaki, Aichi 444-8564 (JP); Ogawa, Satoshi, Okazaki, Aichi 444-8564 (JP)
(74) Representative: Blumbach, Kramer & Partner GbR

(57) **Abstract**

Navigation systems for drivers and other travelers may preferably include search criteria definition means (14, 16, 31, 61, 71, 74) for defining a first search criterion concerning a travel route and a second search criterion concerning a travel time period. Search means (14, 31, 61, 62, 71) may be provided for searching, or initiating a search of, a route according to the first search criterion and the second search criterion. Further, storing means (14, 31, 61, 71) may be provided for storing route guidance data concerning a searched route in a storage medium (16, 74). Such navigation systems enable the driver/user to travel along an optimal route in accordance with the route guidance data, e.g., even if an originally scheduled travel time period is suddenly changed.

## Description

The present invention relates to a navigation system, method and program, and more particularly to techniques for providing or generating route guidance data using such system, method or program.

Various types of known navigation apparatus detect the present position of a vehicle using the Global Positioning System (GPS). The bearing of the vehicle is determined based upon the angular rotational speed (traverse angle) of the vehicle that is measured using a gyro sensor. Cartographic (map) data is read out from a data storage unit and a map image is drawn on a screen of a display unit. As a result, the present position of the vehicle, the vehicle bearing, as well as the area surrounding the present position of the vehicle can be displayed on the map. Such a map assists the vehicle driver to navigate unfamiliar roads.

In such known navigation apparatus, the selection of the destination and the definition of a search criterion is utilized to initiate a search for a suitable route between the present position and the destination. The route determined by the search may be presented to the driver in either of two ways. First, the route may be visually displayed on a search route view page using the display screen. Second, the route may be audibly outputted using a voice output (audio) unit, such as a speaker. By presenting the route information in this manner, the driver can easily follow the searched route.

In addition, some known navigation apparatus include a communication unit (e.g., a receiver) for receiving information concerning traffic congestion (traffic information), which received traffic congestion information also can be displayed on the map.

Some known navigation apparatus can connect to an information center via one or more communication networks. Such network-connectable navigation apparatus are capable of executing the following steps. Before starting a trip, the driver first inputs a departure location and a destination location using a personal computer. A route search data file, which is stored at the information center, is then accessed and appropriate route search data is read out from the route search data file. At the same time, the information center obtains traffic information from an outside source. Then, the information center executes a route search based upon the inputted departure location, the inputted destination location and the obtained traffic information. After completing the route search, the information center generates route guidance data, which data may include voice output data, route data that represents the searched route and/or other similar data. Thereafter, such route guidance data is transmitted to the driver's personal computer and the transmitted route guidance data may be downloaded onto a hard disk or another storage medium.

According to such a network-connectable navigation apparatus, the information center is designed to store time-series statistical data derived from past traffic information, and in particular, past traffic congestion information. Therefore, the information center can search for an optimal route using both present traffic information and such time-series statistical data.

Further, after downloading the route guidance data onto a hard disk of such a network-connectable navigation apparatus, the route guidance data can be copied, e.g., onto a memory card. When such memory card is inserted into the navigation apparatus, the route guidance data can be read out from the card and then communicated audibly and/or visually to the driver, thereby assisting the driver to navigate along unfamiliar routes.

However, because such known navigation apparatus utilize route guidance data transmitted from the information center, such route guidance data may become useless or obsolete if the departure time suddenly changes, because the route guidance data was generated based upon a different departure or arrival time. That is, if the departure time suddenly changes, a new route search based upon the new expected travel time period should preferably be performed, because the new expected travel time period will differ from the originally scheduled travel time period. However, known navigation apparatus do not have this capacity and the driver can not easily obtain new travel route guidance information, e.g., if the route guidance data becomes obsolete due to a sudden change of the departure time.

It is, accordingly, one object of the present teachings to provide an improved navigation system or method or program.

This object is achieved by a system according to claim 1, or a method according to claim 6, or a program according to claim 10.

Further developments of the invention are identified in the dependent claims.

In one aspect of the present teachings, navigation apparatus and route guidance data storage programs are provided that enable the driver to travel using an optimal route, which has been generated based upon route guidance data.

Additional objects, features and advantages of the present teachings will be readily understood after reading the following detailed description of examples and embodiments of the present teachings together with the claims and the accompanying drawings, in which:
FIG. 1 shows a functional block diagram of a representative navigation apparatus according to one aspect of the present teachings.
FIG. 2 shows a block diagram of a navigation system according to another aspect of the present teachings.
FIG. 3 illustrates representative components of a navigation apparatus according to another aspect of the present teachings.
FIG. 4 is a flowchart depicting steps that may be executed, e.g., by a personal computer according to another aspect of the present teachings.

Each of the additional features and teachings disclosed below may be utilized separately or in conjunction with other features and teachings to provide improved navigation apparatus and systems and methods for designing and using such navigation apparatus and systems. Representative examples of the present invention, which examples utilize many of these additional features and teachings both separately and in conjunction, will now be described in detail with reference to the attached drawings. This detailed description is merely intended to teach a person of skill in the art further details for practicing preferred aspects of the present teachings and is not intended to limit the scope of the invention. Therefore, combinations of features and steps disclosed in the following detail description may not be necessary to practice the invention in the broadest sense, and are instead taught merely to particularly describe representative examples of the invention. Moreover, various features of the representative examples and the dependent claims may be combined in ways that are not specifically and explicitly enumerated in order to provide additional useful embodiments of the present teachings. It is, therefore, expressly noted that all features disclosed in the description and/or the claims are intended to be disclosed separately and independently from each other for the purpose of original disclosure, as well as for the purpose of restricting the claimed subject matter independent of the compositions of the features in the embodiments and/or the claims. It is also expressly noted that all value ranges or indications of groups of entities disclose every possible intermediate value or intermediate entity for the purpose of original disclosure, as well as for the purpose of restricting the claimed subject matter.

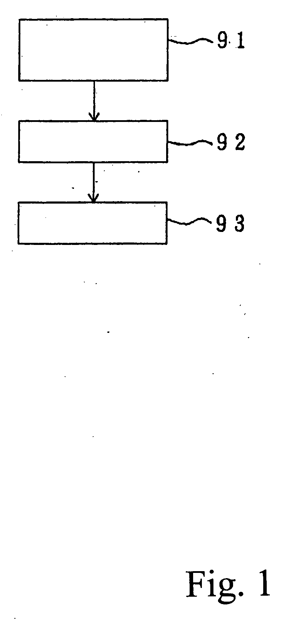

FIG. 1 shows a block diagram of the principle of a representative navigation apparatus or system that preferably includes search criteria definition means 91 for defining a first search criterion concerning travel routes and a second search criterion concerning the period of time that the travel will take place. In addition, search means 92 may be provided for searching and identifying a suitable route based upon the first and second search criteria. Storing means 93 may be utilized in order to store route guidance data concerning the searched route in a storage medium (not shown in FIG. 1).

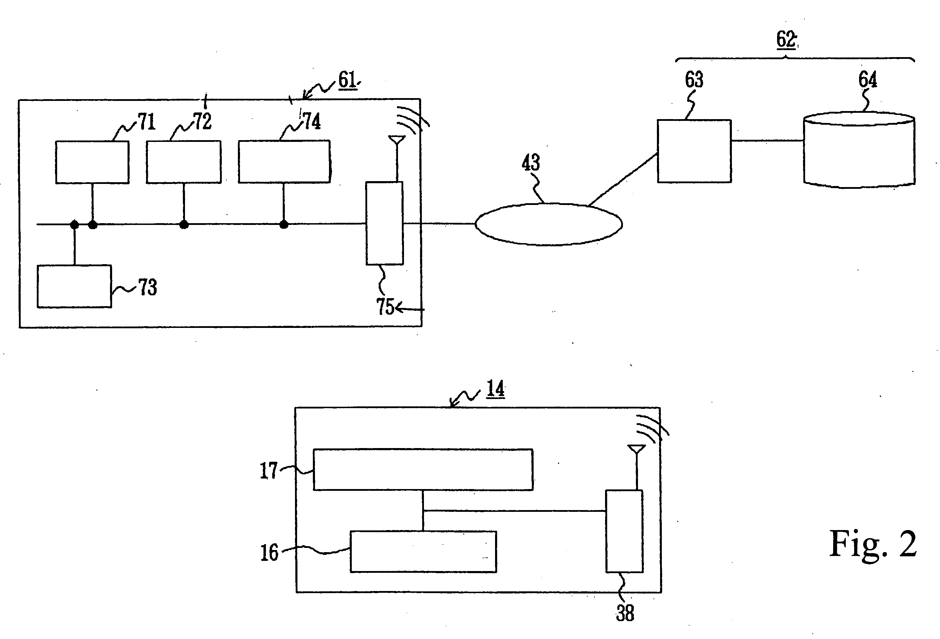

FIG. 2 shows a block diagram of a representative navigation system that may include, e.g., a personal computer 61, which may serve as a user terminal, and an information center 62, which may serve as a source of information and data. The personal computer 61 may be connected to the information center 62 via a network 43, although direct connections are also contemplated. The information center 62 may include, e.g., a home page or website stored on an Internet server. The home page or website may be accessed in order to obtain navigation data. The home page or web page may be managed, e.g., by an Internet service provider (ISP) and any other appropriate party.

FIG. 2 also shows an on-board (i.e., in-vehicle) navigation apparatus 14 that may include a navigation processing unit 17, a data storage unit 16 and a communication unit 38. The on-board navigation apparatus 14 may be fixedly mounted within a vehicle (not shown), or may be portable, and preferably serves to provide route information to the driver of the vehicle while driving. In the present specification, the term "navigation system" generally encompasses the navigation apparatus 14, the network 43, the personal computer 61 and the information center 62, although other definitions are possible for navigation system, as appropriate.

The personal computer 61 may include, e.g., a central processing unit (CPU) 71 serving as an arithmetic processing unit (or controller). A display unit 72 may be utilized to visually notify the user or driver of relevant information. A data input unit 73 may be provided for inputting data into the personal computer 61. A storage unit 74 may be provided to store data. A communication unit 75 may include, e.g., a modem (not shown) for enabling the computer 61 to connect to and communicate with a server 63, and may also include an access point (not shown) that enables wireless transfer of data from the computer 61 to the communication unit 38 of the navigation apparatus 14. The communication unit 75 also may be interchangeably referred to as a data transmitter/receiver or "transceiver."

Although CPU 71 is utilized herein as an arithmetic processing unit, a micro processing unit (MPU) or microprocessor also may be utilized as the arithmetic processing unit, as well as any other device capable of executing instructions according to the present teachings. Representative display units 72 include, e.g., cathode ray tubes (CRT), liquid crystal displays (LCD) and plasma displays. Although the present embodiment utilizes the display unit 72 as the information-notifying unit, it is, of course, also possible to utilize, in addition or in the alternative, a voice output unit, e.g., a speaker, to audibly notify the user of various information.

Representative data input units 73 include, but are not limited to, keyboards, mouse, touch-sensitive panels within the display unit 73 (or other types of touch pads), bar code readers, remote control units, joysticks, light pens and stylus. If a touch-sensitive panel or pad is utilized as the data input unit 73, all operation keys, switches, buttons, icons, etc., are preferably arranged on the panel so that data may be input by touching the appropriate operating key, switch, button, etc.

The storage unit 74 preferably includes an internal storage device (not shown), such as a RAM, a ROM, and/or a flash memory. Optionally, an external storage device (not shown) also may be connected to the storage unit 74. Representative external storage devices that may be utilized with the present teachings include, but are not limited to, one or more of: hard disks, flexible or floppy disks, magnetic tape, magnetic drums, CD-ROMs, CD-Rs, MDs (Mini Disk), DVDs, MO (magneto-optical) disks, IC cards, optical cards and memory cards, none of which are shown for the purpose of illustration clarity. If an external storage device is utilized within storage unit 74, the personal computer 61 (e.g., the storage unit 74) preferably includes a reading device for reading out data from the external storage device and a writing device for writing data into the external storage device.

In the present system, the personal computer 61 is employed as the user terminal. However, the user terminal is not limited to the personal computer 61 and the user terminal may be any means that is capable of connecting to the network 43 in order to establish two-way or bi-directional communications. Representative user terminals include, but are not limited to, electronic hand-held organizers, portable telephones, handheld information terminals, PDAs (Personal Digital Assistant), picture phones and game machines, such as video game machines, including portable game machines.

The information center 62 may include, e.g., the server 63 and a navigation database 64 that can be connected to the server 63. The database 64 preferably contains one or more of: a cartography-related (map) data file, a search-related data file and a facility-related data file, although other files naturally may also be included as necessary. The cartography-related (map) data file preferably contains data that enables maps (i.e., map images) to be drawn on a display. The search-related data file preferably contains search data that is utilized for searching optimal routes. The facility-related data file preferably contains data concerning various facilities, such as service stations, parking areas, etc.

In addition, the cartography-related data file may preferably include one or more of: a road data file, an intersection data file and a node data file. The road data file preferably contains road data concerning respective roads and road links. The intersection data file preferably contains intersection data concerning respective intersections. The node data file preferably contains node data concerning node points located along roads.

The road data may also include sub-data that is determined based upon based upon one or more of the following five factors: road features, road corners, road attributes, road types and expressways/toll roads. Representative sub-data corresponding to the road features include, e.g., one or more of: width, gradient, cants, banks, road surface conditions, the number of traffic lanes, locations where the number of the traffic lanes are reduced/ increased, locations where the width of the road are narrowed/widened, and locations of railway crossings. Representative sub-data corresponding to the road corners include, e.g., one or more of: corner curvature radius, intersection corners, T-square intersection corners, and entrances to a corner/exits from a corner. Representative sub-data corresponding to the road attributes include, e.g., one or more of: ascending (uphill) roads and descending (downhill) roads. Representative sub-data corresponding to the road types include, e.g., one or more of: international highways, state highways, local minor roads, expressways, urban highways and toll roads. Representative sub-data corresponding to the expressways/toll roads include, e.g., one or more of: entrance/exit ramps and tollgates.

Representative sub-data corresponding to the node data include, e.g., one or more of: road junctions (including intersections and T-square intersections), node point coordinates (positions) located along respective roads at specific intervals according to the curvature radius, node links connecting respective nodes with each other, and the altitudes of node points.

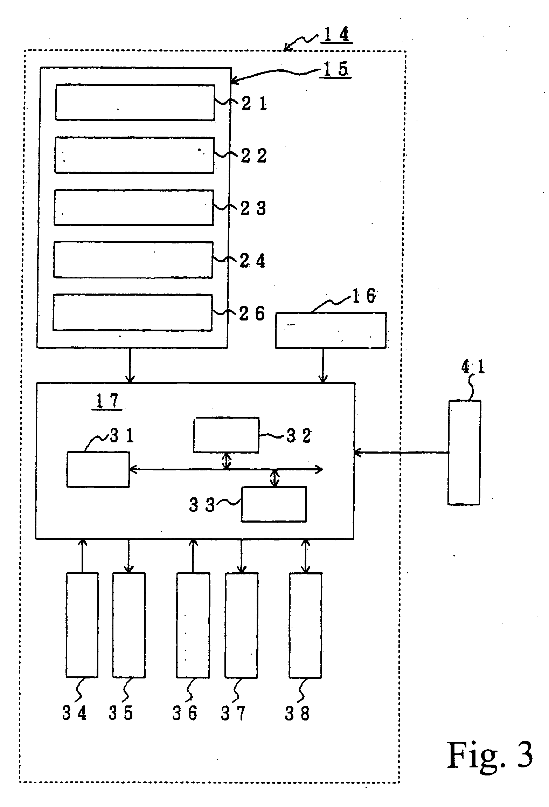

Representative sub-data corresponding to the facility data include, e.g., one or more of: various data concerning facilities, such as hotels, service stations, parking areas, sightseeing spots, etc. In addition, the navigation database 64 may contain voice output (audio) data in order to verbally output information from the voice output unit (identified by reference numeral 37 in FIG. 3), which optionally may be included within the navigation apparatus 14.

The information center 62 preferably may be designed to receive traffic information and general information, such as news/weather forecasts, etc. For example, representative traffic information includes, but is not limited to, information concerning one or more of: traffic congestion, traffic regulations, parking areas, traffic accidents and the number of people currently located at various rest areas on the expressways (i.e., the amount of congestion at the rest areas). Both the traffic information and the general information may be transmitted to the information center 62 from traffic information providers, e.g., a VICS (Vehicle Information and Communication System) center (not shown). After receiving such general information and traffic information in the information center 62, this information can be transferred to the personal computer 61 via the network 43 and/or can be stored in the navigation database 64.

For example, the navigation database 64 may preferably contain a statistical data file for storing the general information and the traffic information. The statistical data file may store past traffic information and past general information in chronological order. Thus, both the past traffic information and the past general information may serve as original statistical data. In addition to the original statistical data, processed statistical data also may be stored in the statistical data file. The processed statistical data is preferably configured to enable both the past traffic information and the past general information to be processed in a predetermined way. Further, the news/weather forecasts optionally may be accessed while processing the past traffic information and the past general information.

Representative administrators of the information center 62 include individuals (sole proprietor), companies, private organizations, local governments and/or government-affiliated agencies. The navigation data that will be distributed may be collected and processed at the navigation center 62 and/or may be purchased from outside sources.

Representative networks 43 include, but are not limited to, one or more of the following types of communication lines: a LAN (Local Area Network), a WAN (Wide Area Network), an intranet, a portable telephone network, a general telephone network, a public switched communication line network, a dedicated communication line network, the Internet, or a combined network comprised of various networks. Further, the network 43 optionally may utilize one or more communication means or devices such as CS (Communication Satellite), BS (Broadcasting Satellite), ground wave digital television broadcasting, and/or FM (Frequency Modulation) multiplex broadcasting. Furthermore, the network 43 may be a communication means such as ETC (Electronic Toll Collection) in ITS (Intelligent Transport Systems) or DSRC (Dedicated Short Range Communication). Each of the personal computer 61, the server 63, the Web servers managed by a specified Internet service provider and the navigation processing unit 17 may operate independently of each other as a single computer, in other circumstances, each may be combined into one computer that operates as a combined computer.

Referring now to FIG. 3, the representative navigation apparatus 14 shown in FIG. 2 will be described in further detail and the elements, which are the same as elements shown in FIG. 2, will be identified with the same reference numerals. The representative navigation apparatus 14 may include, e.g., a present position detection unit 15 that is capable of detecting the present position or location of the vehicle. As noted above, the data storage unit 16 may be provided to store various data and the navigation processing unit 17 may perform arithmetic processing based upon inputted information and data. An input unit 34 may serve as a first data input unit. A display unit 35 may serve as a first information-notifying unit (e.g., an image display). A voice input unit 36 may serve as a second data input unit (e.g., an audio data input unit). A voice output unit 37 may serve as a second information-notifying unit (e.g., an audio output unit). The communication unit 38 may be utilized to communicate with the information center 62 and/or with the personal computer 61. In addition, a vehicle-speed sensor 41 optionally may be coupled to the navigation processing unit 17.

The present position detection unit 15 may include, e.g., one or more of: a GPS 21 serving as a present position detecting device, a geomagnetic sensor 22, a distance sensor 23, a steering sensor 24, a gyro sensor 26 serving as a bearing detection device, and/or an altimeter (not shown). The GPS 21 can be utilized to identify the present position or location on the surface of the Earth by utilizing radio waves broadcast from satellites orbiting the Earth. The geomagnetic sensor 22 may be employed to detect the vehicle bearing by measuring the local terrestrial magnetic field. The distance sensor 23 may be employed to detect the distance between two positions on a road, e.g., by counting the number of rotations or revolutions of the vehicle wheels. In the alternative, the distance sensor 23 may determine the distance, e.g., by measuring vehicle acceleration/deceleration and twice integrating the measured acceleration/deceleration.

The steering sensor 24 preferably detects the steering angle and may be, e.g., a sensor affixed to a rotating portion of the wheels, an optical rotational sensor, a rotational resistance sensor, and/or an angle sensor. The gyro sensor 26 preferably detects the angular rotational speed (traverse angle) of the vehicle by using a gas-rate gyro or a vibrating gyro. By integrating the detected angular rotational speed, the bearing of the vehicle can be determined.

The present position or location naturally may be determined solely by the GPS 21. In other circumstances, however, the present position may be determined based upon a combination of the distance and the vehicle bearing/the rotational angular speed, which may be respectively detected by the distance sensor 23 and by the geomagnetic sensor 22/ the gyro sensor 26. Furthermore, the present position also may be determined based upon a combination of the distance and the steering angle, which may be respectively detected by the distance sensor 23 and the steering sensor 24.

The navigation processing unit 17 may preferably include the following elements: a CPU 31 serving as an arithmetic processing device, a RAM 32 serving as an operational memory when the CPU 31 is processing various data, a ROM 33 storing, e.g., a control program (as well as, e.g., an operating system), and one or more of: a program for searching routes to inputted destinations, a program for providing route guidance while en route, a program for determining a specific road segment, etc. A flash memory (not shown) optionally also may be utilized to store various data, as will be further discussed below. Each of the input unit 34, the display unit 35, the voice input unit 36, the voice output unit 37 and the communication unit 38 preferably may be coupled to the navigation processing unit 17. For example, a semiconductor memory or magnetic core may be utilized for the RAM 32 and/or the ROM 33. Further, a MPU may be used as the arithmetic processing device instead of the CPU 31.

The data storage unit 16 optionally may be designed with an appropriate port or slot for receiving a memory card (not shown) that optionally may serve as an external storage medium or device, as was further described above in paragraph [0021]. Further, the data storage unit 16 may include a recording head (not shown) (i.e., a read/ write device) that serves as a driver for reading out a selected program or data from the memory card as well as for writing data into the memory card. In addition to or in the alternative, other external storage devices may be utilized with the present teachings including, but not limited to, one or more of: magnetic disks (e.g., hard disks and floppy disks), magnetic tape, magnetic drums, CDs, MDs (Mini Disk), DVDs, MO (magneto-optical) disks, IC cards and/or optical cards.

In the present embodiment, the ROM 33 preferably stores programs and the data storage unit 16 preferably stores data. However, such an architecture optionally may be modified and, for example, both the programs and data may be stored in a single external storage device. In this case, the programs and the data may be, e.g., read out from the single external storage device and then written into a flash memory. The programs and the data stored in the flash memory may be updated, e.g., by swapping external storage devices. Further, if the vehicle includes an automatic transmission control device for controlling an automatic transmission (not shown), a program or data for controlling the automatic transmission control device also may be stored in the external storage device.

The data input unit 34 may include, e.g., one or more of: operation keys, switches and buttons (not shown). By operating or manipulating the data input unit 34, the present position at departure can be determined, the departure location and destination location can be inputted and the communication unit 38 may be activated in order to transmit this data. Representative data input units 34 include, but are not limited to, keyboards, mouse, bar code readers, remote controls, joysticks, light pens, stylus and/or touch-sensitive display screens. In the latter case, the operation keys, switches, and buttons preferably may be displayed on the screen so that data may be input by touching appropriate locations on the screen.

Representative information that may be displayed on the display unit 35 includes, but is not limited to, one or more of: operation guidance, operation menus (e.g., pop-up menus), explanations concerning the operation keys, maps, a searched route from the present position to the destination location, guidance information along the searched route and/or FM (Frequency Modulation) multiplex broadcasting programs. Representative display units 35 include, but are not limited to, CRTs, LCDs and plasma displays. In the alternative, the display unit 35 may project a hologram or other type of image onto the windshield or rear view mirror of the vehicle in order to provide a virtual display.

Representative voice input units 36 include microphones and other devices for converting sounds into electrical signals that may be utilized as instructions for the navigation apparatus 14. A representative voice output unit 37 may include a voice synthesizer and a speaker (both not shown) for outputting synthesized voice sounds to the driver. For example, the route guidance information and/or the searched route information may be communicated to the driver in such synthesized voices. In addition to synthesized voices, the speaker can also output various sounds, such as guidance-related information that have been prerecorded on a tape or in a memory.

The communication unit 38 preferably may include a beacon receiver serving as a first receiving means and an FM radio wave receiver serving as a second receiving means. As noted above, the beacon receiver may be adapted to receive information from roadside radio beacon units /optical beacon units (not shown) concerning one or more of: traffic congestion, traffic regulations, parking areas, traffic accidents, the current congestion status of (i.e., the number of people at) expressway rest areas, etc. All such information may be broadcast from a traffic information provider, such as a VICS (Vehicle Information and Communication System) center. The FM receiver may be adapted to receive FM multiplex information, such as news and/or weather forecasts, from FM-broadcasting services. Optionally, the beacon receiver and the FM receiver can be combined into a single VICS receiver. Of course, the FM receiver may be utilized separately from the VICS receiver.

The communication unit 38 is preferably adapted to receive various data, such as D-GPS information for correcting errors generated by the GPS 21. Optionally, the communication unit 38 may detect the present position by receiving positional information transmitted from the radio beacon units or the optical beacon units. In this case, the beacon receiver may serve as a present position detecting device.

Referring back to FIG. 2, the navigation apparatus 14 may be connected to the personal computer 61 via a wireless LAN in order to establish bi-directional communication. As noted above, the communication unit 75 preferably is provided with an access point in order to establish the bi-directional communication. If the communication unit 38 is provided with PCMCIA/PC card expansion slots for the bi-directional communication, a wireless LAN card (not shown) could be loaded into the communication unit 38. Although the navigation apparatus 14 is connected to the personal computer 61 via the wireless LAN in the present embodiment, the present teachings naturally are not limited to such an embodiment. For example, the navigation apparatus 14 may be connected to the personal computer 61, e.g., via a wired LAN. In this case, a hub (not shown) may be added to the communication unit 75, thereby enabling the communication unit 38 to be attached to and detached from the hub.

In such a representative navigation system, the following steps of a representative method for providing navigation data may be performed when the driver inputs departure and destination location information, as well as desired departure or arrival time, into the personal computer 61 using the data input unit 73. Upon receipt of the data from the data input unit 73, the search criteria definition means 91 initiates a process in which the first search criterion concerning travel routes is defined by both the inputted departure location and the inputted destination location. In addition, a second search criterion concerning the travel time period is defined by either the desired departure time or the desired arrival time. Then, both of the defined search criteria may be transmitted to the information center 62. Thus, in one representative example, the search criteria definition means 91 may be embodied, e.g., as a program stored in the storage unit 74, which program is executed by the CPU 71.

In the above-noted embodiment, although the first search criterion is defined by the inputted departure location and the inputted destination location, the present teachings are not limited to such an embodiment. For example, the first search criterion may be defined by the road type (e.g., ordinary roads, expressways, toll roads, etc.) or pass-through points. Optionally, a third search criterion concerning the transportation means (i.e., the type of vehicle) also may be utilized. In this case, the third search criterion may be defined by the type of transportation means, e.g., automobile, bus, train, ship, and/or airplane, that will be employed to travel from the departure location to the destination location. Thus, in this optional embodiment, the third search criterion also may be transmitted to the information center 62, together with the first and second search criteria.

In another optional example of the present teachings, if a PDA having PCMCIA/PC card expansion slots designed to receive a GPS card is utilized as the user terminal, instead of the personal computer 61, such PDA may determine the present position of the vehicle and set the departure location.

After the information center 62 has received the search criteria transmitted from the personal computer 61 (or PDA or other user terminal), information acquisition means (not shown) in the server 63 may initiate a process for acquiring the information/data that will be necessary to search for the route. For example, the information acquisition means may access the navigation database 64 in order to read out the search data from the search-related data file, as well as to read out the statistical data from the statistical data file. As was noted above, the statistical data may be derived from the traffic information transmitted by a VICS center.

After acquiring the necessary infomation/data, a first search means (not shown) in the server 63 initiates a first process for searching a route. For example, the route can be searched according to the fist, second and third criteria using the traffic information, the original statistical data, and the processed statistical data.

Upon completing the first process for searching a route, the guidance data transmission means (not shown) in the server 63 sets the search time frame for the route search based on the expected travel time period. Herein, the search time frame (i.e., the time period during which the mute can be re-searched by the navigation apparatus 14) is intended to means a specified time period that includes the expected travel time period, as well as optionally also including additional time periods before and/or after the expected travel time period, as will be further discussed below.

Subsequently, the route guidance transmission means initiates a process for transmitting one or more of the following data, which data preferably serves as the route guidance data, to the personal computer 61: route data presenting searched routes, time data concerning the one or more of: cartographic (map) data for drawing a map image that will depict the area surrounding the searched route and/or voice output data for outputting route guidance concerning the searched route from the voice output unit 37 to the driver. The time data preferably contains the statistical data, the processed statistical data and transportation-means timetable data concerning the transportation-means, except when travel will be done solely by automobiles.

The route guidance data transmission means may calculate the search time frame, which includes the at least the expected travel time period, in various ways. For example, when the second search criterion is defined by the desired departure time, the travel time period (i.e., the time period between the desired departure time and the estimated arrival time that is calculated based on the desired departure time) is set by the route guidance data transmission means in the first search process for searching a route. In the alternative, when the second search criterion is defined by the desired arrival time, the travel time period (i.e., the time period between the estimated departure time, which departure time is calculated based on the desired arrival time, and the desired arrival time) is set by the route guidance data transmission means in the first search process for searching a route. If the second search criterion is defined by both the desired departure time and the desired arrival time, the travel time period (between the desired departure time and the desired arrival time) is set by the route guidance data transmission means. The search time frame may be optionally obtained, e.g., by adding one or two hours before and/or after the expected travel time period. Naturally, other periods of time may be added to the expected travel period, as appropriate, in order to determine the search time frame and this aspect of the present teachings is not particularly limited.

As was noted above, the route data may include road attribute data for the roads along the searched route. The cartographic data preferably contains mesh information concerning a mesh in which the searched route is included, as well as other meshes that are adjacent to the most relevant mesh. Both the original statistical data and the processed statistical data concern roads or points contained in the cartographic data that represents a map of the area proximal to the searched route.

The transportation-means timetable data preferably contains, e.g., one or more of the following: bus timetable data, train timetable data, ship timetable data and/or airplane timetable data. Each of these timetable data preferably may include, e.g., one or more of: identification numbers of boarding platforms, transportation service numbers and departure/arrival times. For example, representative boarding platforms include bus stops, railroad stations, harbors, and airports, all of which may be contained within the cartographic data that represents the area around the searched route. Representative transportation service numbers include bus-service numbers, train-service numbers, ship-service numbers and/or flight-service numbers. The departure/arrival times includes the times when the transportation-means departs from/arrives at the boarding platforms, etc., within the defined search time frame.

In the present system, although the voice output data may be transmitted from the information center 62 to the personal computer 61, the present invention is not limited to such an embodiment. For example, the voice output data may be originally stored within the data storage unit 16 of the navigation apparatus 14. In this case, there is no need to transmit the voice output data, which serves as one type of route guidance data, from the information center 62 to the computer 61.

Upon receiving the route guidance data from the information center 62, the storing means 93, which may be embodied by a program stored in storage unit 74 and executed by the CPU 71, initiates a process for storing the route guidance data. For example, such stored route guidance data may be downloaded onto a hard disk in the storage unit 74. In addition to or in the alternative, the route guidance data may be stored in one or more external memory devices, as was further described above in paragraph [0021].

Furthermore, if the driver's vehicle (which includes navigation apparatus 14) is located within transmission distance of the personal computer 61, the downloaded route guidance data stored on the hard disk can be sent, e.g., by wireless transfer, to the navigation apparatus 14 aboard the vehicle. Such data transmission can be initiated, e.g., by inputting appropriate commands using the data input unit 73. The route guidance data transmitted to the navigation apparatus 14 may be stored, e.g., in the flash memory (not shown) of the navigation processing unit 17. In the alternative, if the route guidance data is stored in an external memory device, the external memory device may be coupled to the navigation apparatus 14 so that the navigation apparatus 14 can utilize the data stored on the external memory device.

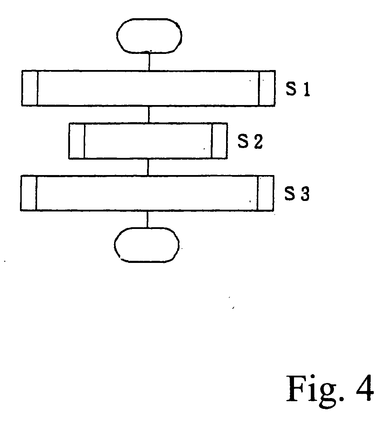

FIG. 4 is a flowchart showing a representative method for transferring route guidance data from the personal computer 61 to the navigation apparatus 14. When the user inputs an appropriate command using the data input unit 73 (shown in FIG. 2) in order to start up (boot up) the navigation apparatus 14 (i.e., the navigation apparatus 14 is remotely turned on by personal computer 61), a navigation apparatus start-up means, which may be embodied as a program that is executed by the CPU 71, may initiate a process for starting up (booting up) the navigation apparatus 14. As a result, power is supplied from the car battery to operate the navigation apparatus 14. Then, data transmission means, which also may be embodied as a program that is executed by the CPU 71, may initiate the data transmission process. As a result, the route guidance data is read out from the hard disk within the storage unit 74 and transmitted to the navigation apparatus 14 via the communication unit 75 and the communication unit 38, respectively. Along with this data transmission, the CPU 31, which optionally may be one element of the route guidance data storing means, may initiate a process for storing the route guidance data in the flash memory of the navigation apparatus 14.

After storing all the route guidance data in the flash memory, a navigation apparatus shut-off means, which also may be embodied as a program executed by the CPU 71, may initiate a process for shutting off the navigation apparatus 14. Upon being shut or turned off, the navigation apparatus 14 switches to a standby state, in which the user can access the route guidance data at any time.

Thus, the process shown in FIG. 4 can be summarized as follows:
Step 1: Execute a navigation apparatus start-up program
Step 2: Execute a data-transmission program
Step 3: Execute a navigation apparatus shut-off program

Next, a representative method for operating the navigation apparatus 14 will be described. For example, when the vehicle ignition (not shown) is engaged or turned on, the navigation apparatus 14 may be automatically started. Then, the GPS 21 may determine the present position of the vehicle and the vehicle bearing may be detected based upon the traverse angle measured by the gyro sensor 26. Subsequently, the route guidance means, which may be embodied as a program executed by the CPU 31, may initiate a process for reading out the route guidance data from the flash memory in order to display a map image on the screen in the display unit 35. For example, the map image may include the present position of the vehicle, the area surrounding the vehicle, the vehicle bearing and the searched route from the departure location to the destination location. At the same time, the voice output unit 37 also may audibly output the route guidance for the driver's convenience. Thus, such a map image may preferably show the present position of the vehicle, a map depicting the area around the vehicle, the vehicle bearing and the searched route, thereby helping the driver to travel along the searched route.

However, as was discussed at the beginning of this specification, the originally scheduled departure time sometimes is suddenly changed, thereby forcing the driver (user) to travel along the searched route during a travel time period that differs from the originally scheduled travel time period. In such a situation, the driver preferably should be able to input new data using the data input unit 34 so as to redefine one or more of the first, second, and third search criterion. In other words, the driver (user) naturally would like to avoid traffic jams or other travel delays that may arise along the searched route during the time period that the travel will actually occur, which time period differs from the originally scheduled time period of the optimal searched route. Of course, the optimal route during one time period (e.g., rush hour) may be quite different than the optimal route during a different time period (e.g., late evening).

Referring back to FIG. 1, the search means 92, which also may be embodied as a program executed by CPU 31, preferably includes first route search means and second route search means. These route search means may be embodied, e.g., as program instructions. Upon redefining one or more of the search criteria, the second route search means 92 preferably executes a second route search process, whereby the route guidance data is read out from the flash memory and a new route is searched according to the first and second (and optionally the third) route search criteria. Thus, a new route may be searched based upon the route guidance data that was previously stored in the data storage unit 16. Thus, the new optimal route may be presented to the driver and the driver will be advised to travel along a new searched optimal route for the new expected travel time period in accordance with the route guidance data.

According to such a navigation apparatus 14, it is not necessary to contact and interrogate the information center 62 concerning new route guidance data when the driver wishes to perform another search for a new route, thereby reducing the amount of time required for the route search. Also, by storing the search data in the data storage unit 16, the driver (user) avoids the possible problem of not being able to access the information center 62 in order to conduct an updated search. Thus, the driver (user) can easily conduct the new search from any location and the driver (user) is not inconvenienced by having to find means for accessing the information center 62.

In the present embodiment, although the route guidance data downloaded onto the hard disk of the storage unit 74 was transmitted to the navigation apparatus 14, the present teachings are not limited to such an embodiment. As was noted above, such route guidance data may be copied onto a memory card that may be loaded or inserted into the navigation apparatus 14. The route guidance data utilized by the driver to travel the searched route is not limited to the hard-disk-stored route guidance data, and may also include, e.g., memory-card-stored route guidance data.

Another aspect of the present teachings concerns the situation, in which the user/driver is required to travel along a specified portion of the searched route by bus, train, ship, or airplane, and the travel situation worsens due to a change of the arrival time at the bus top, the railroad station, the harbor, or the airport, e.g., because of a suddenly developed traffic jam or other cause for delay. In such situation, the user/driver may be required to board a different bus, train, ship, or airplane during a travel time period that differs from the originally scheduled travel time period. Therefore, in order to avoid such an inconvenience, the user/driver may input new data into the data input unit 34 so as to redefine one or more of the first, second and third search criteria. Such redefinition is possible in the present embodiment, because the route guidance data contains the transportation-means timetable data and this data may be stored in the data storage unit 16.

Upon redefining each of the search criteria, the second route search means (e.g., CPU 31) starts to read out the route guidance data from the data storage unit 16 (e.g., the flash memory). Then, in view of the one or more redefined first, second, and/or third route search criteria, a new route and/or a new transportation means can be searched within the route guidance data stored in the data storage unit 16 and then provided to the user/driver. Therefore, the user/driver can travel along a specified portion of the searched route using a different bus, train, ship, or airplane, if necessary, in accordance with the new information obtained from the stored route guidance data.

Thus, in a first aspect of the present teachings, navigation systems may include means for defining search criteria (i.e., search criteria definition means). The search criteria may include, but is not limited to, a first search criterion concerning travel routes and a second search criterion concerning the travel time (i.e., the period of time that travel will occur). A means for initiating a search (i.e., a search means) for a route based upon the first search criterion and the second search criterion also may be included. Further, a means for storing (e.g., a storing means) route guidance data concerning a searched route in a storage medium also may be included.

In another aspect of the present teachings, a route guidance means may be included in order to provide the driver or user with route guidance derived from the route guidance data. In another aspect of the present teachings, the route guidance data preferably includes route data concerning searched routes, as well as time data concerning a specified search time period in which the travel time period is included. In another aspect of the present teachings, the time data may preferably include statistical data derived from traffic information, which time data optionally may include transportation-means timetable data.

In another aspect of the present teachings, a route guidance program is provided, which program is preferably executed by a computer or central processing unit. The route guidance program may include the search criteria definition means for defining the first search criterion concerning travel routes and the second search criterion concerning travel hours, the search means for searching the optimal route based upon the first search criterion and the second search criterion, and the storing means for storing route guidance data concerning the searched route in a storage medium. In other words, the route guidance program may include instructions for defining a first search parameter based upon an expected travel route and instructions for defining a second search parameter based upon an expected time period during which the travel along the expected travel route will occur. The program also may include instructions for initiating a search of a database containing route guidance information, which search will be performed using the first and second parameters. The route guidance database preferably includes relevant data, such as relevant cartography (map) information, and preferably may include data concerning present traffic and/or weather conditions. Further, the program may include information for storing data, which is generated by searching the route guidance database, in a storage medium.

Generally speaking, the invention can be embodied in a variety of devices that include first means for storing a program, second means for executing the program and third means for storing data provided by executing the program. The first and third means optionally may be embodied by the same device, e.g., a memory device. For example, in one embodiment of the present teachings, the search criterion definition means 91, the search means 92 and storing means 93 may be embodied, partially or entirely, by the CPU 71 and storage unit 74. In another embodiment, the server 63 and navigation database 64 may at least partially embody the search means 92. In another embodiment, the search criterion definition means 91, the search means 92 and storing means 93 may be embodied, partially or entirely, by the CPU 31 and the data storage unit 16. In this embodiment as well, the server 63 and navigation database 64 may at least partially embody the search means 92. However, the server 63 and navigation database 64 may not be required to practice the present teachings when route guidance data has been stored in the data storage unit 16 and an additional search (e.g., using a new search time frame) is conducted using the stored route guidance data without connecting to the information center 62. Naturally, various other embodiments may be developed based upon the present teachings, such as, e.g., embodying the program(s) and means for executing the programs in a PDA or other user terminal, as was described above in paragraph [0022].

For ease in understanding the accompanying drawings, the following elements, which are embodied in the accompanying drawings, are listed by their respective numbers as follows:
- 14: Navigation Apparatus
- 15: Present Position Detection Unit
- 16: Data Storage Unit
- 17: Navigation Processing Unit
- 21: GPS
- 22: Geomagnetic Sensor
- 23: Distance Sensor
- 24: Steering Sensor
- 26: Gyro Sensor
- 31: CPU
- 32: RAM
- 33: ROM
- 34: Data Input Unit
- 35: Display Unit
- 36: Voice Input Unit
- 37: Voice Output Unit
- 38: Communication Unit
- 41: Vehicle Speed Sensor
- 43: Network
- 61: Personal computer
- 62: Information center
- 63: Server
- 64: Navigation Database
- 71: CPU
- 72: Display Unit
- 73: Data Input Unit
- 74: Storage Unit
- 75: Communication Unit
- 91: Search criteria definition means
- 92: Search means
- 93: Storing means

## Claims

1. A system for providing navigation information, comprising:
search criteria definition means (31, 71, 91) for defining a first search criterion concerning a travel route and a second search criterion concerning a travel time period;
search means (31, 63, 71, 92) for initiating a search for a route according to the first search criterion and the second search criterion; and
storing means (31, 71, 93) for storing in a storage means route guidance data concerning the route identified by the route search.

2. A system according to claim 1, further comprising route guidance means (31,35,37) for providing a user with route guidance derived from the route guidance data.

3. A system according to claim 1 or 2, wherein the route guidance data comprises route data concerning searched routes and time data concerning specified search time frame, which includes the expected travel time period.

4. A system according to claim 3, wherein the time data contains statistical data that is derived from traffic information.

5. A system according to claim 3 or 4, wherein the time data contains transportation-means timetable data.

6. A method for providing navigation information, comprising:
defining a first search criterion concerning a travel route,
defining a second search criterion concerning a travel time period,
initiating a search of a database for a route utilizing the first search criterion and the second search criterion as search parameters, whereby route guidance data is generated, and
storing in a storage medium the route guidance data.

7. A method as in claim 6, further comprising re-searching for new route guidance data if the travel time period changes.

8. A method as in claim 6 or 7, wherein the database contains statistical data that is derived from traffic information, whereby the route guidance data is generated to provide a route that avoids traffic congestion.

9. A method as in claim 6,7 or 8, wherein the database further contains transportation-means timetable data and the route guidance data includes information concerning relevant transportation means departure times within a search time flame that includes the expected travel time period.

10. A computer program comprising code means for performing, when run on a computer, the method of any one of claims 6 to 9.
